# EUROPEAN PATENT SPECIFICATION

(11) **EP 1 077 602 B1**
(45) Date of publication and mention of the grant of the patent: **20.03.2002**
(21) Application number: 99922301.9
(22) Date of filing: 13.05.1999
(51) Int. Cl.: A01K 63/00, A01K 29/00

(54) **ICE PROTECTION DEVICE FOR PONDS**
EISFREIHALTER FÜR TEICHE
DISPOSITIF ANTI-GLACE POUR ETANGS

(30) Priority: 13.05.1998 GB 9810132
(43) Date of publication of application: 28.02.2001
(73) Proprietor: Myall, John Edwin, Lincoln LN5 0AD (GB)
(72) Inventor: Myall, John Edwin, Lincoln LN5 0AD (GB)
(74) Representative: Loven, Keith James
(86) International application number: GB9901519
(87) International publication number: WO9957970

(56) References cited:
- DE-U- 8 811 124
- US-A- 3 324 661

## Description

### Field of the Invention

This invention relates to an Ice protection device for ponds and the like, for use in protecting fish and other aquatic life from the harmful effects of prolonged ice cover on the pond.

### Background to the Invention

The harmful effects to aquatic life, especially fish and amphibians, from prolonged Ice cover on ponds, lakes and even fish-farming tanks, for example the build-up under the ice of toxic gases arising from decomposition of organic matter, are well-recognised. Many proposals have been made for devices to avoid or minimise these effects. For example, in GB-A-2 297 727 there is disclosed a pond float comprising a thermally-insulating body of buoyant material in the form of a disc which floats on the pond and which has openings on its underside by which gases can enter a chamber within the body. The chamber is provided with diametrically-opposed ducts in the perimeter of the disc for escape of the gases to the atmosphere. The disc is provided with a wire frame for the attachment of an anchor weight to hold the device on the surface of the pond.

Another device, disclosed in GB-A-2 186 771, comprises a simple rectangular frame of a buoyant thermally-insulating material which sits on the surface of the pond. A lid of a similar material is supported in the frame in such a manner as to leave a small gap around the edge of the lid for escape of gases. The lid can be removed to allow the fish to be fed.

DE 88 11 124 U discloses an expanded polystyrene device of circular plan having narrow downwardly directed vent holes therearound communicating with the interior of the device. Since the vent holes are near to the surface of the water on which the device floats and can be blocked by surrounding ice, as is acknowledged in the specification, an optional verdcally-extending vent tube can be fitted.

A problem with the conventional type of pond ice protection device, as exemplified by the prior art devices described hereinbefore, is that, being formed of relatively light buoyant thermally-insulating materials, such as expanded polystyrene, and being arranged to rest on the surface of the pond, they are unstable in high winds and can lift from the pond and be blown away. Another problem is that they are not well adapted to the needs of frogs and other amphibians which are attracted to the shelter which the device can provide. In particular, the conventional devices do not provide access for the frogs above the surface of the water.

### Summary of the Invention

The invention provides an ice protection device for a pond or the like, comprising a hollow thermally-insulated body with one end thereof open, the body being adapted to float on water with the open end at a distance below the surface of the water greater than the maximum expected thickness of Ice formed on the water, and a generally planar flange projecting from the body around the outside thereof so as to rest on the surface of the water, the body having an enlarged head portion above the flange with at least one vent opening into the space between the head portion and the flange to allow the passage of air into the hollow body and gases out of the hollow body, and wherein the vent opening, or at least one of the vent openings, is dimensioned so as to permit passage therethrough of small amphibians such as frogs, toads or newts.

The or each vent opening is preferably arranged so as to be directed downwards, in use, avoiding the direct cooling action of wind on the water within the device, and providing protection of the vent opening from a build-up of snow or ice.

The upper end of the device is preferably dosed by a removable lid, permitting inspection of the inside of the device, as well as the introduction of fish food into the water. The device, with the exception of the lid, may be formed as a single integral body, for example being moulded from an expanded plastics material. The moulding may conveniently be carried out by pouring a liquid self-blowing resin into a mould, allowing the resin to expand and cure, and then removing the body from the mould. A multi-part mould will be required to permit the internal shape to be formed. The material chosen will have a density sufficient to ensure that the device is partly submerged in the water and is therefore stable in windy conditions, while affording a high level of thermal insulation. Alternatively, the body may be formed of a light material such as expanded plastics material, with ballast incorporated to adjust the buoyancy to the desired level. For example, a metal tube may be fitted within or incorporated into the body.

Typically, the depth below the water surface of the opening will be of the order of 100mm for use in most areas of the U.K., but for those areas which experience high levels of frost in the winter, a greater depth may be used. This may be achieved either by providing versions of the device having a longer lower portion, or more conveniently by adding an extension to the downwardly-projecting part of the body. The body is conveniently circular in cross-section, and the extension may therefore be in the form of an insulated sleeve fitting over the downwardly-projecting part of the body, or be provided with a portion which fits into the open lower end of the body.

It has been found that the device of the invention provides an ice-free opening in an ice-bound pond, even in very cold conditions, permitting escape of toxic gases and permitting the ingress of oxygen. The device of the invention is stable and does not require the use of anchor weights or the like. The device of the invention has also been found to be very attractive to amphibians such as frogs, permitting the frogs to shelter inside, but to be able to pass freely into and out of the device without reentering the water, permitting access to dry land in the event of sudden freezing of the pond when the frogs are not hibernating. The device has also been found to be attractive to frogs at other times of the year, providing a safe and warm refuge with direct access to water. It is therefore desirable to leave the device on the pond (in the case of a garden pond in particular) all year round, rather than just in the winter as tends to be the case with prior art devices of this general type.

The interior of the device may, if desired, be provided with supports to facilitate escape of frogs and the like from the water into the device.

While the device is conveniently formed with a generally cylindrical shape, the upper part may be adapted to present a less artificial appearance, for example by moulding with an irregular shape having the appearance of a stone or other natural artide.

Although reference has been made to the use of the device on small garden ponds and the like, it is not confined to such use, and can be made in any size according to the desired location. For example, in fish-farming, the device may be made suffidently large to permit entry by the fish farmer to gain access to fish when the tank is frozen over, permitting inspection and treatment of fish as well as feeding. For such purposes it may be desirable to provide the interior of the device with access steps or a ladder.

### Brief Description of the Drawings

In the drawings, which illustrate an exemplary embodiment of the invention:

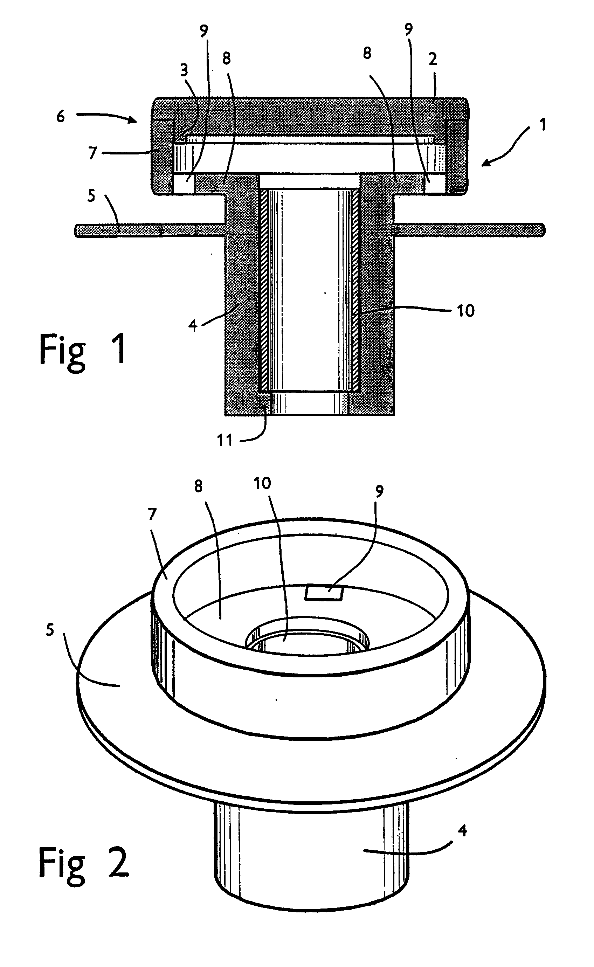

Figure 1 is a cross-sectional elevation of the device; and
Figure 2 is a perspective view of the device, with the lid removed, from approximately 90° to the view in Figure 1.

### Detailed Description of the illustrated Embodiment

The device comprises a hollow main body part 1 moulded of expanded plastics material and a lid 2 of similar material, formed with a cylindrical flange 3 upstanding therefrom which is a close fit in the open upper end of the main body part 1. The main body part 1 consists of a lower tube 4 having an annular flange 5 extending outwardly therearound at the level at which the device floats in water, and an enlarged hollow cylindrical head portion 6 extending from the upper end of the lower tube 4. The head portion 6 has an outer wall 7 connected to the tube 4 by means of an annular horizontal portion 8, through which a pair of apertures 9 are provided to allow air and gases to pass in use, and which also allow the passage of frogs and other amphibians, the annular portion 8 providing a convenient floor surface within the body upon which the frogs can rest, sheltered from the external weather. The positioning of the openings 9 facing downwardly beneath the enlarged head portion 6 ensures that the openings are protected from blockage by snow and ice, while allowing air to enter to displace any toxic gases escaping up the tube 4 from the water below the ice. It is believed that the combination of the air flow and the presence of the insulating material keeps the water within the device free from ice, even when the surrounding water is deeply frozen. The flange 5 provides a surface usable by the frogs and the like in passing into and out of the device, at the same time enhancing the stability of the device in the water in windy conditions.

A section of steel pipe 10 is located within the tube 4, supported by an internal rim 11 at the lower end of the tube, to provide ballast so that the buoyancy of the body is such that, in use, the flange 5 rests on the surface of the water. The added mass also ensures that the device is not blown off the surface of the water by even the strongest of winds, but remains at the desired location on the pond or the like.

## Claims

1. An ice protection device for a pond or the like, comprising a hollow thermally-insulated body with one end thereof open, the body being adapted to float on water with the open end at a distance below the surface of the water greater than the maximum expected thickness of ice formed on the water, and a generally planar flange projecting from the body around the outside thereof so as to rest on the surface of the water, the body having an enlarged head portion above the flange with at least one vent opening into the space between the head portion and the flange to allow the passage of air into the hollow body and gases out of the hollow body, and wherein the vent opening, or at least one of the vent openings, is dimensioned so as to permit passage therethrough of small amphibians such as frogs, toads or newts.

2. An ice protection device according to Claim 1, wherein the or each vent opening Is arranged so as to be directed downwards, in use.

3. An ice protection device according to Claim 1 or 2, wherein the upper end of the device is dosed by a removable lid, permitting inspection of the inside of the device, as well as the introduction of fish food Into the water.

4. An ice protection device according to Claim 1, 2 or 3, wherein the device, with the exception of the lid, is formed as a single integral body.

5. An ice protection device according to Claim 4, wherein the body is moulded from an expanded plastics material.

6. An Ice protection device according to Claim 4 or 5, wherein the material chosen has a density sufficient to ensure that the device is partly submerged in the water and is therefore stable in windy conditions, while affording a high level of thermal insulation.

7. An ice protection device according to any preceding Claim, comprising a removable extension sleeve surrounding the open end of the body to increase the depth of the opening in the water.

8. An Ice protection device according to any preceding claim, wherein the interior of the device is provided with supports to facilitate escape of frogs and the like from the water into the device.

9. An ice protection device according to Claim 5, comprising a ballast weight to adjust the buoyancy of the device.

10. An ice protection device for a pond or the like, comprising a hollow thermally-insulated body with one end thereof open, the body being adapted to float on water with the open end at a distance below the surface of the water greater than the maximum expected thickness of ice formed on the water, and a generally planar flange projecting from the body around the outside thereof so as to rest on the surface of the water, the body having an enlarged head portion above the flange with at least one vent opening into the space between the head portion and the flange to allow the passage of air into the hollow body and gases out of the hollow body, and wherein the body is provided with a ballast weight to adjust the buoyancy of the device.

11. An ice protection device according to Claim 9 or 10, wherein the ballast weight comprises a metal pipe lining at least a part of the hollow body.

## Patentansprüche

1. Eisschutzvorrichtung für einen Teich oder dergleichen, die einen hohlen, wärmemäßig isolierten Körper mit einem offenen Ende aufweist, wobei der Körper geeignet ist, so auf Wasser zu schwimmen, daß sich das offene Ende in einem Abstand unter der Wasseroberfläche befindet, der größer ist, als die maximal zu erwartende Dicke des sich auf dem Wasser bildenden Eises, und mit einem im wesentlichen ebenen Flansch, der von dem Körper um seine Außenseite herum so absteht, daß er auf der Oberfläche des Wassers aufliegt, wobei der Körper einen vergrößerten Kopfteil oberhalb des Flansches mit wenigstens einer Belüftungsöffnung in den Raum zwischen dem Kopfteil und dem Flansch besitzt, um den Durchgang von Luft in den hohlen Körper und von Gasen aus dem hohlen Körper heraus zu ermöglichen, und wobei die Belüftungsöffnung oder wenigstens eine der Belüftungsöffnungen so dimensioniert ist, daß sie ein Hindurchschlüpfen von kleinen Amphibien wie z.B. Fröschen, Kröten oder Wasserrmolchen ermöglicht.

2. Eisschutzvorrichtung nach Anspruch 1, bei der die oder jede Belüftungsöffnung so angeordnet ist, daß sie im Betrieb nach unten gerichtet ist

3. Eisschutzvorrichtung nach Anspruch 1 oder 2, bei der das obere Ende der Vorrichtung durch einen entfernbaren Deckel verschlossen ist, der die Inspektion der Innenseite der Vorrichtung sowie das Einbringen von Fischfutter in das Wasser ermöglicht.

4. Eisschutzvorrichtung nach Anspruch 1, 2, oder 3, bei der die Vorrichtung mit Ausnahme des Deckels als einstückig integraler Körper ausgebildet ist.

5. Eisschutzvorrichtung nach Anspruch 4, bei der der Körper aus einem gedehnten Kunststoffmaterial geformt ist.

6. Eisschutzvorrichtung nach Anspruch 4 oder 5, bei der das gewählte Material eine Dichte aufweist, die ausreicht, um sicherzustellen, daß die Vorrichtung teilweise in das Wasser eingetaucht und daher bei Wind stabil ist, während sie gleichzeitig ein hohes Maß an Wärmeisolation liefert.

7. Eisschutzvorrichtung nach einem der vorhergehenden Ansprüche, die eine entfernbare Verlängerungshülse umfaßt, die das offene Ende des Körpers umgibt, um die Tiefe der Öffnung im Wasser zu vergrößern.

8. Eisschutzvorrichtung nach einem der vorhergehenden Ansprüche, bei der das Innere der Vorrichtung mit Konsolen versehen ist, um das Entweichen von Fröschen und dergleichen aus dem Wasser in die Vorrichtung hinein zu erleichtern.

9. Eisschutzvorrichtung nach Anspruch 5, die ein Balastgewicht umfaßt, um das Aufschwimmen der Vorrichtung einzustellen.

10. Eisschutzvorrichtung für einen Teich oder dergleichen, die einen hohlen, wärmeisolierten Körper mit einem offenen Ende umfaßt, wobei der Körper auf dem Wasser so schwimmen kann, daß sich das offene Ende in einem Abstand unter der Wasseroberfläche befindet, der größer ist, als die maximal zu erwartende Dicke des sich auf dem Wasser bildenden Eises, und mit einem im wesentlichen ebenen Flansch, der von dem Körper um die Außenseite herum so vorsteht, daß er auf der Oberfläche des Wassers aufliegt, wobei der Körper einen vergrößerten Kopfteil oberhalb des Flansches mit wenigstens einer Belüftungsöffnung in den Raum zwischen dem Kopfteil und dem Flansch aufweist, um das Hindurchtreten von Luft in den hohlen Körper und von Gasen aus dem hohlen Körper heraus zu ermöglichen, und bei der der Körper mit einem Balastgewicht versehen ist, um das Aufschwimmen der Vorrichtung einzustellen.

11. Eisschutzvorrichtung nach Anspruch 9 oder 10, bei der das Balastgewicht eine Metallrohrauskleidung zumindest eines Teils des hohlen Körpers umfaßt.

## Revendications

1. Dispositif anti-glace pour un étang ou similaire, comprenant un corps creux isolé thermiquement dont une extrémité est ouverte, le corps étant adapté pour flotter sur l'eau avec l'extrémité ouverte à une distance au-dessous de la surface de l'eau qui est plus grande que l'épaisseur attendue maximale de glace formée sur l'eau, et une bride généralement plane se projetant à partir du corps autour de l'extérieur de celui-ci de façon à reposer sur la surface de l'eau, le corps ayant une partie de tête élargie au-dessus de la bride avec au moins une ouverture d'évent dans l'espace entre la partie de tête et la bride pour permettre le passage d'air dans le corps creux et l'expulsion de gaz hors du corps creux, et dans lequel l'ouverture d'évent, ou au moins l'une des ouvertures d'évent, est dimensionnée de façon à permettre le passage à travers elle de petits amphibiens tels que grenouilles, crapauds ou tritons.

2. Dispositif anti-glace selon la revendication 1, dans lequel la ou chaque ouverture d'évent est disposée de façon à être dirigée vers le bas, lors de l'utilisation.

3. Dispositif anti-glace selon l'une des revendications 1 ou 2, dans lequel l'extrémité supérieure du dispositif est fermée par un couvercle amovible, permettant l'inspection de l'intérieur du dispositif, ainsi que l'introduction de nourriture pour poissons dans l'eau.

4. Dispositif anti-glace selon l'une des revendications 1, 2 ou 3, dans lequel le dispositif, à l'exception du couvercle, est réalisé sous la forme d'un corps d'un seul tenant.

5. Dispositif anti-glace selon la revendication 4, dans lequel le corps est moulé à partir d'une matière plastique expansée.

6. Dispositif anti-glace selon l'une des revendications 4 ou 5, dans lequel la matière choisie a une densité suffisante pour assurer que le dispositif soit partiellement immergé dans l'eau et est donc stable dans des conditions venteuses, tout en fournissant un niveau élevé d'isolation thermique.

7. Dispositif anti-glace selon l'une quelconque des revendications précédentes, comprenant un manchon d'extension amovible entourant l'extrémité ouverte du corps pour augmenter la profondeur de l'ouverture dans l'eau.

8. Dispositif anti-glace selon l'une quelconque des revendications précédentes, dans lequel l'intérieur du dispositif est doté de supports pour faciliter que les grenouilles et similaires s'échappent de l'eau dans le dispositif.

9. Dispositif anti-glace selon la revendication 5, comprenant un poids de ballast pour ajuster la flottabilité du dispositif.

10. Dispositif anti-glace pour un étang ou similaire, comprenant un corps creux isolé thermiquement dont une extrémité est ouverte, le corps étant adapté pour flotter sur l'eau avec l'extrémité ouverte à une distance au-dessous de la surface de l'eau plus grande que l'épaisseur attendue maximale de glace formée sur l'eau, et une bride généralement plane se projetant à partir du corps autour de l'extérieur de celui-ci de façon à reposer sur la surface de l'eau, le corps ayant une partie de tête agrandie au-dessus de la bride avec au moins une ouverture d'évent dans l'espace entre la partie de tête et la bride pour permettre le passage d'air dans le corps creux et l'expulsion de gaz hors du corps creux, et dans lequel le corps est doté d'un poids de ballast pour ajuster la flottabilité du dispositif.

11. Dispositif anti-glace selon l'une des revendications 9 ou 10, dans lequel le poids de ballast comprend une canalisation métallique revêtant intérieurement au moins une partie du corps creux.
